# EUROPÄISCHE PATENTSCHRIFT

(11) **EP 1 724 137 B1**
(45) Veröffentlichungstag und Bekanntmachung des Hinweises auf die Patenterteilung: **29.07.2009**
(21) Anmeldenummer: 06005387.3
(22) Anmeldetag: 16.03.2006
(51) Int. Cl.: B60J 1/20

(54) **Fensterrollo mit längsverstellbarer Wickelwelle**
Window roller blind with axially adjustable winding shaft
Store à enroulement pour fenêtre avec rouleau axialement réglable

(30) Priorität: 20.05.2005 DE 102005023967
(43) Veröffentlichungstag der Anmeldung: 22.11.2006
(73) Patentinhaber: BOS GmbH & Co. KG, 73760 Ostfildern (DE)
(72) Erfinder: Gradl, Jürgen, 72649 Wolfschlugen (DE)
(74) Vertreter: Rüger, Barthelt & Abel Patentanwälte

(56) Entgegenhaltungen:
- EP-A- 1 304 246
- EP-A- 1 393 940
- DE-U1- 29 923 460
- GB-A- 244 277
- US-A- 1 238 642
- US-A- 1 560 199
- US-A- 5 845 956
- US-A1- 2002 069 980

## Beschreibung

Bei viertürigen Limosinen ist das hintere Seitenfenster der hinteren Seitentür in der Regel aufgeteilt in einen etwa rechteckigen Abschnitt und einen etwa dreieckigen Abschnitt. Diese Aufteilung ergibt sich aufgrund der Notwendigkeit, den größten Teil der Fensterscheibe, die sich dort befindet, zum Zwecke des Öffnens herauf und herunter bewegen zu können. Hierdurch entsteht neben dem beweglichen Teil der Scheibe der besagte dreieckförmige Bereich. Beide Bereiche sollen mit Fensterrollos abgeschattet werden. Für den etwa rechteckigen Teil wird ein Fensterrollo verwendet, dass sich vertikal auf und ab bewegt, wobei die Wickelwelle unterhalb der Fensterbrüstung untergebracht ist.

Die Abschattung des dreieckförmigen Teils geschieht mit einer Rollobahn, deren Zuschnitt an diesen Bereich angepasst ist, wobei die Wickelwelle vertikal verläuft und parallel zu jener Führungsschiene angeordnet ist, die das Fenster aufteilt. Die Betätigung des Rollos erfolgt, wie dies aus verschiedenen Druckschriften bekannt ist, mittels einer Führungsschiene, die unterhalb der Fensterbrüstung vorgesehen ist. An der Spitze der Rollobahn greift ein Zugglied an, dass in der Führungsschiene beweglich gelagert ist.

Aufgrund von Fertigungstoleranzen ist insbesondere der Spalt, den die ausgezogene Rollobahn des dreieckförmigen Teils mit der Fensterlaibung bildet, nicht immer parallelflankig. Wegen der Toleranzen erweitert oder verjüngt sich der Spalt in Richtung auf die Wickelwelle, was im Allgemeinen als unschön empfunden wird.

Aus der DE 299 23 460 U1 ist ferner ein Springrollo für Kraftfahrzeuge bekannt. Dieses Springrollo weist ein Gehäuse auf, in dem die Wickelwelle für das Rollo drehbar gelagert ist. Das Gehäuse ist seitlich mit Befestigungsflanschen versehen, die maulähnliche Schraubenlöscher für Befestigungsschrauben enthalten.

Auf diese Weise ist ein Toleranzausgleich zwischen der Lage der Schrauben und den Befestigungsöffnungen in den Flanschen möglich.

Die US 1 560 199 beschreibt verstellbare Konsolen, die die Achszapfen der Wickelwelle eines Springrollos aufnehmen. Jede Konsole besteht aus einem Gehäuse, in dem eine Schraubspindel drehbar gelagert ist, die axial unverscheiblich ist. Auf der Schraubspindel sitzt ein mit Gewinde versehener Schlitten, an dem ein Halter angebracht ist. Der Halter ragt durch einen Schlitz in dem Gehäuse nach außen und enthält seinerseits einen Schlitz zur Aufnahme des abgeflächten Ersatzes des Springrollos bzw. der Halter an dem anderen Ende eine Bohrung zur drehbaren Aufnahme des betreffenden Zapfens.der Wickelwelle.

Die Verstellung bzw. Anpassung geschieht, indem diese Halter mit Hilfe der Schraubspindeln längs der Schraubspindeln verstellt werden. Auf diese Weise wird das Rollo als Ganzes verschoben.

Die US 1, 238, 642 zeigt die Merkmale des Oberbegriffs des Anspruchs 1.

Ausgehend hiervon ist es Aufgabe der Erfindung ein Rollo zu schaffen, das einen Toleranzausgleich ermöglicht.

Diese Aufgabe wird erfindungsgemäß mit einem Fensterrollo mit den Merkmalen des Anspruches 1 gelöst.

Bei dem neuen Fensterrollo ist eine Rollobahn vorgesehen, die eine Befestigungskante aufweist. Mit dieser Befestigungskante ist die Rollobahn an einer Wickelwelle befestigt. Mit Hilfe einer Antriebseinrichtung ist zumindest die Wickelwelle im Sinne des Aufwickelns der Rollobahn auf die Wickelwelle in Umdrehungen zu versetzen.

Der Wickelwelle ist eine Lagereinrichtung zugeordnet, die eine Verstelleinrichtung aufweist, um die Axiallage der Wickelwelle einzustellen.

Durch Verstellen der Axiallage ist es möglich, bei dreieckförmigen Seitenfensterrollos den verbleibenden unteren Spalt gegenüber der Fensterbrüstung so zu justieren, dass ein paralleler Spalt entsteht.

Die Axialverstellung der Wickelwelle lässt sich darüber hinaus auch dazu verwenden, bei Rollos mit rechteckigem Zuschnitt der Rollobahn einen Verzug in der Rollobahn zu eliminieren. Bei solchen Rollos, wie sie beispielsweise im Heckfensterbereich auftreten, ist die Vorderkante der Rollbahn, d.h. jene Kante, die sich vor dem Fenster hin und her bewegt, mit einem Zustab fest verbunden. Die effektive Länge des Zugstabs ändert sich, ausgehend von der eingefahrenen Stellung in der das Heckfenster die größte Breite aufweist, in Richtung auf die ausgefahrene Stellung. An dieser Stelle ist der Abstand zwischen den Führungsschienen des Zugstabs zur Folge der Fenstergeometrie am kleinsten. Wenn die konstruktive Lage des Zugstabs gegenüber der Wickelwelle aufgrund von Karosserietoleranzen nicht mit der tatsächlichen Lage übereinstimmt, tritt in der Rollobahn ein hässlicher Schrägverzug auf. Der Schrägverzug lässt sich eliminieren, wenn die Wickelwelle in Axialrichtung verstellt wird.

Die Befestigungskante für die Rollobahn ist vorzugsweise eine gerade Kante, was leicht reproduzierbare Verhältnisse bei der Montage bzw. dem Befestigen der Rollbahn an der Wickelwelle ergibt.

Um die Rollobahn im Bereich zwischen der eingefahrenen und der ausgefahrenen Stellung zu führen sind Führungsmittel vorgesehen.

Im Falle eines dreieckförmigen Fensterrollos umfassen die Führungsmittel ein Zugglied, das an der Spitze des Rollobahnzuschnitts befestigt ist. Im Falle von viereckigen Rollobahnzuschnitten besteht das Zugglied aus einem Zugstab.

Je nach Ausführung der Rollobahn gehören zu dem Führungsmitteln eine oder wenigstens zwei Führungsschienen, die sich gegenüber befinden und zwischen denen der Zugstab geführt ist.

In jenem Falle enthalten die Führungsschienen eine Führungsnut mit einer Nutenkammer und einem Nutenschlitz, wobei die lichte Weite des Nutenschlitzes kleiner ist als die lichte Weite der Nutenkammer.

Die Nutenkammer dient gleichzeitig der ausknicksicheren Führung eines linienförmigen Schubglieds, das vorzugsweise über einen Getriebemotor formschlüssig angetrieben ist.

Zu der Lagereinrichtung gehört ein zylindrischer Zapfen auf dem die Wickelwelle drehbar gelagert ist. Die Lagerung.auf der Wickelwelle auf dem Zapfen kann auch so gestaltet sein, dass die Wickelwelle auf dem Zapfen zusätzlich translatorisch bewegt werden kann.

Wenn der Zapfen eine Schulter trägt, die als Axiallager dient, kann durch Verschiebung des Zapfens bzw. der Schulter die Axiallage der Wickelwelle verstellt werden. Um die Verstellung auf einfache Weise zu gewährleisten, bzw. die Anlage an der Drucklagerfläche sicher zu stellen, ist zweckmäßigerweise der Federmotor mit einer Feder versehen, die so eingebaut ist, dass die Wickelwelle mit ihrer Stirnseite an der Drucklagerfläche anliegend gehalten ist.

Zu der Lagereinrichtung kann auch eine Lagerbüchse gehören mit einer Lagerbohrung. Die Büchse kann dazu verwendet werden, die Wickelwelle an einem Ende drehbar zu lagern.

Der Büchse ist ein Halter zugeordnet, mit dessen Hilfe die Büchse axial verstellbar ist, um so die Axiallage der Wickelwelle einzustellen. Zur Einstellung der Büchse kann sie mit einem Außengewinde versehen sein, die in ein Innengewinde des Halters eingeschraubt ist. Durch Verdrehen der Büchse lässt sich die Axiallage der Büchse justieren.

Der Büchse ist zweckmäßigerweise ein Betätigungsglied zugeordnet. Das Betätigungsglied kann beispielsweise von einer Sternscheibe gebildet sein.

Damit sich die Büchse nicht verstellt, wenn die Wickelwelle betätigt wird, ist der Büchse eine Sicherungseinrichtung zugeordnet, beispielsweise in Gestalt einer Rasteinrichtung, von der ein Teil beispielsweise von der sternförmigen Scheibe gebildet sein kann.

Im Übrigen sind Weiterbildungen der Erfindung Gegenstand von Unteransprüchen.

In der nachfolgenden Figurenbeschreibung ist das Grundprinzip der Erfindung vereinfacht erläutert. Es versteht sich, dass eine Reihe von Abwandlungen ohne weiteres möglich sind um die Grundprinzipien an die jeweiligen Gegebenheiten anzupassen, insbesondere hinsichtlich der Größe, der Formgestalt und dergleichen.

In der Zeichnung sind Ausführungsbeispiele des Gegenstandes der Erfindung dargestellt. Es zeigen:
- Fig. 1: eine perspektivische Sicht auf die rechte Innenseite des Fondbereiches eines Pkw;
- Fig. 2: eine Prinzipdarstellung der Seitenfensterrolloanordnung nach Fig. 1;
- Fig. 3: eine Prinzipdarstellung der axial verstellbaren Wickelwelle des dreieckförmigen Rollos nach Fig. 2;
- Fig. 4: eine weitere Ausführungsform der Verstelleinrichtung für die Axiallage der Wickelwelle des Rollos nach Fig. 2 und
- Fig. 5: den prinzipiellen Aufbau des viereckigen Teils des Rollos nach Fig. 2

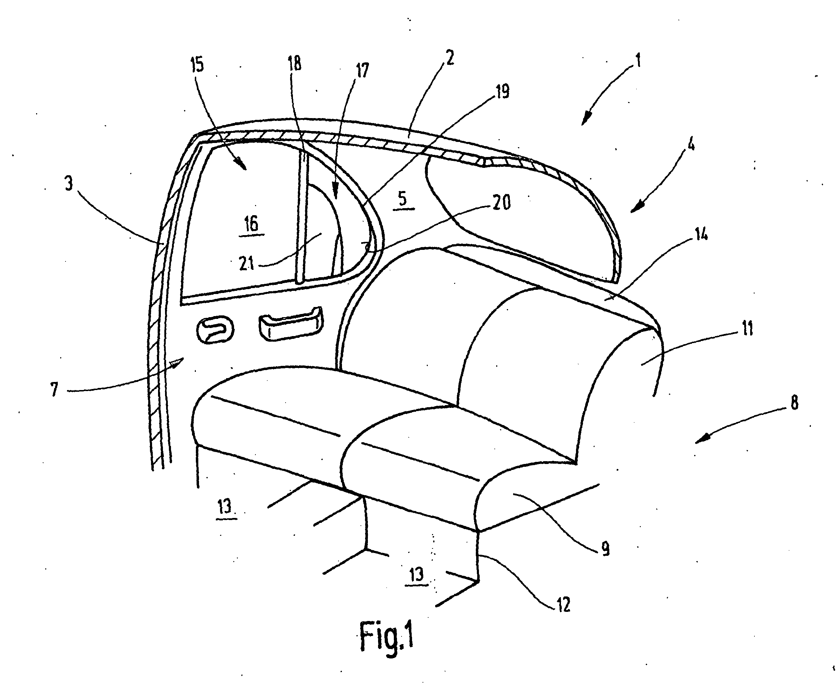

Fig. 1 stellt den aufgebrochen geschnittenen Fondbereich eines Pkw dar. Die Figur veranschaulicht einen Blick auf die rechte Innenseite, die zu der nicht veranschaulichten linken Innenseite spiegelbildlich ist. Die Darstellung ist vereinfacht, so sind beispielsweise Karosserieinnenstrukturen, wie Versteifungen und Befestigungsmittel, nicht gezeigt, da ihre Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seiten des Fahrzeugs zu denken. Das Dach 2 geht an seiner Hinterkante in ein Heckfenster 4 über. Seitlich endet das Heckfenster 4 an einer C-Säule 5, die sich auf Abstand zu der B-Säule 3 befindet. Die C-Säule 5 trägt eine Innenverkleidung.

Zwischen der B-Säule und der C-Säule ist an der B-Säule eine hintere rechte Seitentür 7 in bekannter Weise anscharniert. Auf der Höhe der hinteren rechten Seitentür 7 befindet sich eine Rücksitzbank 8 zu der eine Sitzfläche 9 sowie eine Rücksitzlehne 11 gehören. Die Rücksitzfläche 9 liegt auf einer Sockelfläche 12 auf, vor der sich Fußräume 13 befinden.

Auf der Höhe der Oberkante der Rücksitzlehne 11 erstreckt sich eine Hutablage 14 zu der Unterkante der Heckscheibe 4.

Die hintere rechte Seitentür 7 ist in der für Limosinen üblichen Weise mit einem Seitenfenster 15 versehen. Das Seitenfenster 15 gliedert sich in einen ersten Fensterabschnitt 16 sowie einen hinteren zweiten Fensterabschnitt 17. Der erste Fensterabschnitt 16 hat eine im Wesentlichen rechteckige Gestalt und wird nach hinten von einer Führungssäule 18 begrenzt, die gleichzeitig eine Kante des zweiten Fensterabschnittes 17 darstellt. Der zweite Fensterabschnitt 17 wird gegenüber der Führungssäule 18 von einem Fensterrahmen 19 begrenzt, der, zusammen mit der Führungssäule 18, die Gestalt des zweiten Fensterabschnitts 17 festlegt. Er ist, wie dargestellt, etwa dreieckförmig wobei bei 20 die Berandung eine starke Krümmung aufweist. Diese starke Krümmung liegt der Führungssäule 18 gegenüber.

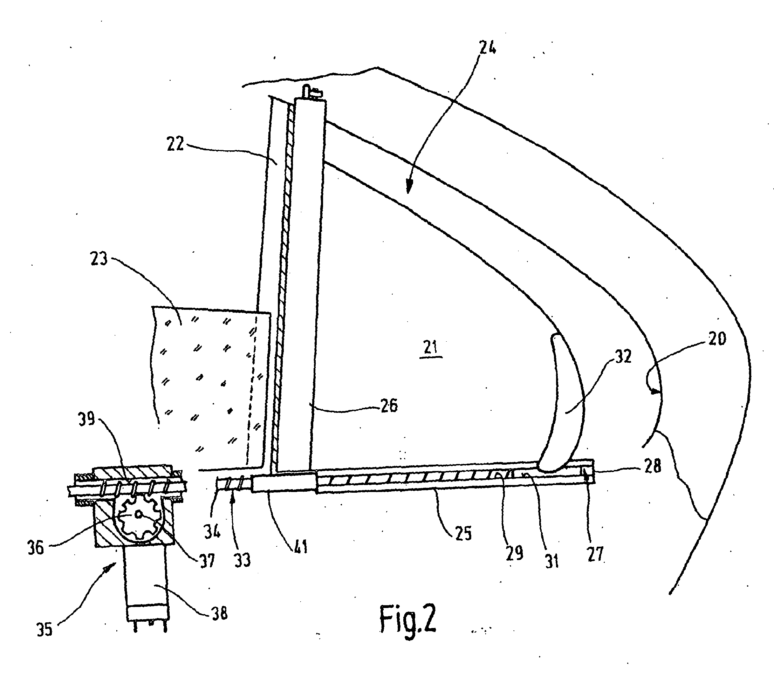

Beiden Fensterabschnitten 16, 17 ist jeweils ein Fensterrollo zugeordnet, wobei in der Figur ein Teil einer ausgefahrenen Rollobahn 21 für den Fensterabschnitt 17 zu erkennen ist. Der Aufbau des Seitenfensterrollos mit der Rollobahn 21 ist im Einzelnen in Fig 2 veranschaulicht.

Der Vollständigkeit halber sei erwähnt, dass die Führungsschiene 18 in bekannter Weise eine Führungsnut 22 enthält, um eine Seitenfensterscheibe 23 zu führen. Eine weitere entsprechende Nut befindet sich in der gegenüberliegenden Seite des Fensterabschnitts 15.

Fig. 2 lässt ein insgesamt mit 24 bezeichnetes Seitenfensterrollo erkennen. Zu dem Seitenfensterrollo 24 gehört die etwa dreieckförmig zugeschnittene Rollobahn 21. Ihre Außengestalt entspricht etwa der Gestalt des hinteren Fensterabschnittes 17. In dem Bereich der Unterkante des Fensterabschnittes 17 verläuft eine zu dem Seitenfensterrollo 24 gehörende Führungsschiene 25. Ein Rollogehäuse 26 ist parallel zu der Führungsschiene 18 angeordnet und mit dieser beispielsweise zu einer Baueinheit vereinigt.

Die Führungsschiene 25 verläuft etwa im rechten Winkel zu dem Gehäuse 26 und enthält eine Führungsnut 27, deren Querschnitt sich aus einer Nutenkammer 28 und einem Nutenschlitz 29 zusammensetzt, dessen lichte Weite kleiner ist als es dem Durchmesser der Nutenkammer 28 entspricht. Der Nutenschlitz 29 öffnet sich in Richtung zu der Innenseite des Fahrzeugs. In der Nutenkammer läuft ein Führungsstück 31, an dem ein flossenähnliches Konturteil 32 über einen nicht erkennbaren Hals befestigt ist. Das Konturteil 32 ist an dem spitzen Ende des Rollobahnzuschnitts 21, wie gezeigt, starr befestigt, beispielsweise durch Kleben.

Zum Ausfahren der Rollobahn 21 ist ein biegeelastisches lineares Schubglied 33 vorgesehen, das die Gestalt einer Art flexibler Zahnstange aufweist mit einer Schrägverzahnung, die sich schraubenförmig um eine Seele 34 herum erstreckt. Der Außendurchmesser des linienförmigen Schubglieds entspricht der lichten Weite der Nutenkammer 28.

Der Antrieb des Schubglieds 33 geschieht mit Hilfe eines Getriebemotors 35, der über ein Untersetzungsgetriebe ein Ausgangszahnrad 36 antreibt, das auf einer Getriebeausgangswelle 37 drehfest sitzt.

Zu dem Getriebemotor 35 gehört ein permanent erregter Gleichstrommotor 38.

Die Verzahnung des Ausgangszahnrads 36 ist so gestaltet, dass es formschlüssig mit der Verzahnung des Schubglieds 33 kämmen kann. Hierzu ist das Getriebegehäuse des Getriebemotors 35 mit einer durchgehenden Führungsbohrung 39 versehen, die tangential an dem Ausgangszahnrad 36 vorbeiführt. Mit der Führungsbohrung 39 fluchtet ein Führungsrohr 41, das den Getriebemotor mit dem Gehäuse 26 benachbarten Ende der Führungsschiene 25 verbindet um in diesem Bereich das Schubglied 33 ausknicksicher zu führen.

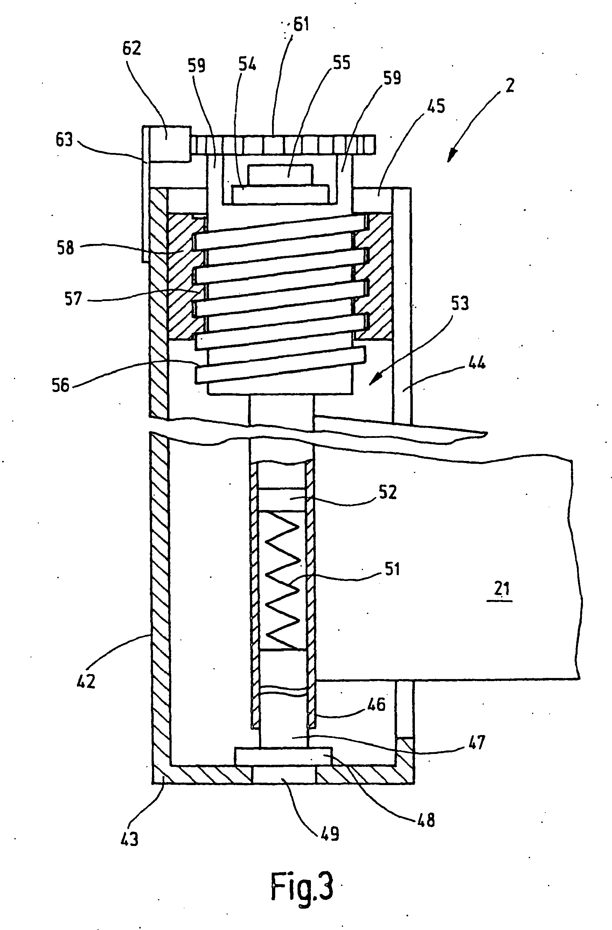

Der innere Aufbau des Rollogehäuses 26 ergibt sich aus Fig. 3 in der die Einzelteile sehr stark schematisiert veranschaulicht sind.

Das Rollogehäuse 26 hat etwa eine becherförmige Gestalt mit einer zumindest innen zylindrischen Seitenwandanordnung 42 und einem Gehäuseboden 43. Zum Durchtritt der Rollobahn 21 ist die Seitenwandanordnung 42 mit einem Schlitz 44 versehen, der fast bis zu dem Boden 43 reicht. Der Schlitz 44 reicht bis zu einer oben befindlichen zylindrischen Gehäuseöffnung 45. Im Inneren des Rollogehäuses 26 ist eine Wickelwelle 46 drehbar gelagert. Die Wickelwelle 46 ist rohrförmig und an ihrer Umfangsseite ist die Rollobahn 21 in bekannter Weise befestigt.

Das in Fig. 3 untere Ende der Wickelwelle 46, das dem unteren Ende in der Betriebsstellung entspricht, ist auf einem ortsfesten und rotationsfesten zylindrischen Zapfen 47 drehbar gelagert. Der Zapfen 47 endet an einem Bund 48, an den ein Fortsatz 49 anschließt, der in einer Bohrung in dem Gehäuseboden 43 verankert ist. Mit Hilfe des Zapfens 47 ist das betreffende Ende der Wickelwelle 46 drehbar und translatorisch gelagert. Der Zapfen 47 dient gleichzeitig als Widerlager für eine Schraubenfeder 51, die als Federmotor fungiert und deren anderes Ende über ein Verbindungsstück 52 mit der Wickelwelle 46 drehfest verbunden ist. Die Schraubenfeder 51 dient gleichzeitig als Vorspanneinrichtung, die bestrebt ist, die Wickelwelle 46 in Richtung auf den Bund 48 vorzuspannen.

Der Lagerzapfen 47 weist eine Länge auf, die so bemessen ist, das über den gesamten konstruktiv vorgesehenen axialen Verschiebehub der Wickelwelle 46 der Zapfen 47 mit der Wickelwelle 46 in Eingriff bleibt.

Das obere Ende der Wickelwelle 46 ist in einer Lagerbüchse 53 drehbar gelagert. Die Lagerbüchse 53 enthält eine koaxiale Durchgangsbohrung, in der die zylindrische Wickelwelle 46 drehbar gelagert ist. Am oberen Ende ist die Wickelwelle 46 mit einer Anlaufscheibe 54 versehen, die mittels einer in die Wickelwelle 46 eingedrehten Schraube 55 gegen die betreffende Stirnseite der Wickelwelle 46 fest in Anlage gehalten ist. Wie die Fig. 3 erkennen lässt, befindet sich die Anlaufscheibe gegenüber der oberen Stirnseite der Lagerbüchse 53 an dieser anliegend.

Die Lagerbüchse 53 ist an ihrer Außenumfangsseite mit einem Gewinde 56 versehen, das mit einem Mutterngewinde 57 zusammenpasst, das in einem zylindrischen Einsatz 58 ausgebildet ist. Der zylindrische Einsatz 58 steckt dreh- und ortsfest in der Seitenwandanordnung 52 in der Nähe der oberen Gehäuseöffnung 45. Der Einsatz 58 ist beispielsweise mit dem Gehäuse 26 verklebt.

Aus dem oberen Ende der Lagerbüchse 53 stehen mehrere Pfeiler 59 vor, mit deren Hilfe eine sternförmige Scheibe 61 mit der Lagerbüchse 53 drehfest verbunden ist. Die sternförmige Scheibe 51 ist als Ring ausgebildet, um durch sie hindurch die Anlaufscheibe 54 einführen zu können.

Die sternförmige Scheibe ist konzentrisch zu der Längsachse der Lagerbüchse 53 angeordnet, und diese wiederum ist konzentrisch oder koaxial zu der Wickelwelle 46.

Die Sternscheibe 61 wirkt, zusammen mit einem Rastglied 62, als Rasteinrichtung, um ein unerwünschtes Drehen der Sternscheibe 61 zu verhindern. Das Rastglied 62 sitzt an einer Blattfeder 63, die an der Außenseite des Gehäuses 26 verankert ist.

Die Funktionsweise des Seitenfensterrollos 24 ist wie folgt:

Durch die als Federmotor wirkende Schraubenfeder 51 ist die Wickelwelle 46 im Sinne des Aufwickelns der Rollobahn 25 auf die Wickelwelle 46 zu vorgespannt. Wenn sonst keine Kräfte auf die Rollobahn bzw. das Konturteil 32 einwirken, wird somit die Rollobahn 21 auf der Wickelwelle 46 aufgewickelt und in dem Rollogehäuse 26 verstaut. Zum Ausfahren der Rollobahn 21 vor dem Fensterabschnitt 17 wird der Getriebemotor 35 mit der entsprechenden Drehrichtung in Gang gesetzt. Das Ausgangszahnrad 36, das formschlüssig mit der Verzahnung des Schubglieds 33 kämmt, fördert das Schubglied 33 in Richtung auf die Führungsschiene 25. Dabei kommt das freie Ende des Schubglieds 33 mit dem Führungsstück 31 in Eingriff und schiebt das Führungsstück 31 vor sich her. Da das Führungsstück 31 über das Konturteil 32, das als Zugglied wirkt, mit dem spitzen Ende der Rollobahn 21 gekoppelt ist, wird die Rollobahn 21 von der Wickelwelle 46 gegen die Zugwirkung der Schraubenfeder 51 abgezogen und vor dem Fensterabschnitt 17 ausgebreitet. Die Bewegung kommt zum Stillstand, wenn das Konturteil 32 an dem spitzen Ende 20 des Fensterabschnitts 17 angekommen ist.

Die Wickelwelle 46 ist während der Drehbewegung einerseits auf dem Zapfen 47 drehbar gelagert und andererseits in der Bohrung der Lagerbüchse 53. Die vertikale Position definiert die obere Stirnseite der Lagerbüchse 53 gegen die die Anlaufscheibe 54 anliegt. Diese Anlage wird durch die Vorspannung der Schraubenfeder 51 erzwungen, die bestrebt ist.die Wickelwelle 56 nach unten zu ziehen.

Sollte bei ausgefahrenem Rollo die Unterkante der Rollobahn 21 nicht parallel zur benachbarten Fensterkante verlaufen, kann die Höhe der Wickelwelle 46 justiert werden bis die gewünschte Parallelität erreicht ist. Hierzu wird mittels der Sternscheibe 61 die Lagerbüchse 53 in der entsprechenden Richtung gedreht. Zufolge der Gewindeverbindung der Lagerbüchse 53 mit dem Einsatz 58, verschiebt sich bei die Lagerbüchse 53 bei der Drehung je nach Drehrichtung in axialer Richtung nach oben oder nach unten in Richtung von dem den Zapfen 47 weg oder auf diesen zu. Diese Axialverschiebung wird über die Anlaufscheibe 54 auf die Wickelwelle 46 übertragen, die demgemäß mit in Axialrichtung verschoben wird. In jeder axialen Einstellung sorgt die auf Zug belastete Schraubenfeder 51 dazu, dass die Anlaufscheibe 54 in Anlage zu dem oberen Stirnende der Lagerbüchse 53 bleibt. Der Bund 48 ist weit genug weg um den konstruktiv vorgesehenen Verschiebehub nicht zu begrenzen.

Damit sich die gewünschte Einschraubtiefe der Lagerbüchse 53 in dem Einsatz 58 nicht verstellt, ist die Rastklinke 62 vorgesehen, die in die Verzahnung der Sternscheibe 61 eingreift und die Sternscheibe 61 entsprechend gegen Drehen sichert. Zufolge der drehfesten Verbindung mit der Lagerbüchse 53 ist somit auch letztere gegen Drehen gesichert.

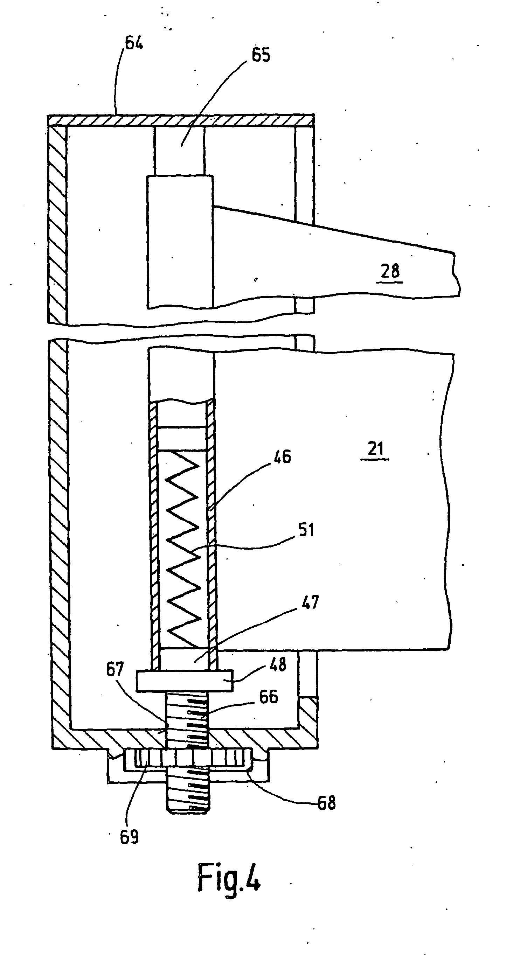

Bei der gezeigten Anordnung wird die axiale Lage der Wickelwelle 46 verstellt, indem am oberen Ende gegen die Wirkung der Schraubenfeder 51 gezogen wird. Fig. 4 zeigt eine Ausführungsform, bei der axiale Verstellung mit Hilfe einer Druckeinrichtung erfolgt.

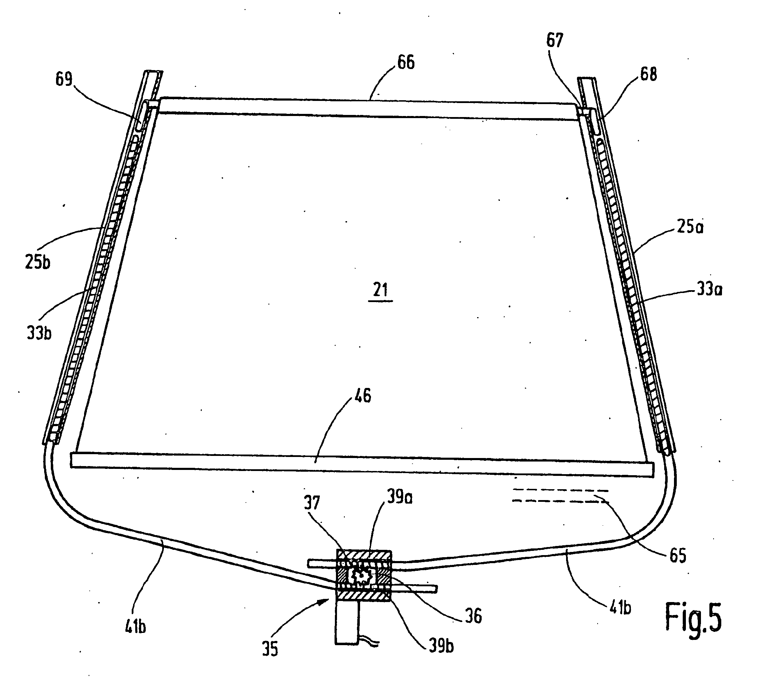

Soweit in Fig. 5 bereits beschriebene Teile wieder auftauchen, sind sie mit demselben Bezugszeichen versehen und nicht erneut erläutert. Die Beschreibung beschränkt sich im Wesentlichen auf die Unterschiede.

Bei der Anordnung nach Fig. 4 sitzt auf der oberen Gehäuseöffnung 45 ein Deckel 64, der einen nach unten zeigenden Lagerzapfen 65 trägt. Der Lagerzapfen 65 ragt drehbar und axial verschieblich in die Wickelwelle 46 hinein. Der Lagerzapfen 65 weist eine Länge auf, die so bemessen ist, dass über den gesamten konstruktiv vorgesehenen axialen Verschieberhub der Wickelwelle 46 der Zapfen 65 mit der Wickelwelle 46 in Eingriff bleibt.

Der untere Lagerzapfen 47 ist, verglichen mit dem Lagerzapfen 47 nach Fig. 3, wesentlich kürzer, da keine Notwendigkeit besteht, dass sich die Wickelwelle 46 gegenüber diesem in Längsrichtung verschiebt. Die Wickelwelle 46 liegt mit ihrem unteren Stirnende auf dem Bund 48 auf, der ein Axiallager bildet.

Unterhalb des Bunds 48 ist ein Gewindefortsatz 66 vorgesehen; der über die Länge gesehen, seitlich abgeplattet ist, so dass zwei einander gegenüberliegende und zueinander parallelen Flachseiten entstehen.

Eine in dem Boden 43 enthaltene Durchgangsöffnung 67 ist in der Kontur an dem Querschnitt des Gewindezapfens 66 angepasst, womit der Gewindezapfen 66 in der Öffnung 67 lediglich in axialer Richtung zu verschieben ist, jedoch sich dort nicht drehen kann. Auf der Unterseite des Bodens 43 befindet sich eine zum Betrachter hin offene Tasche 68, die eine flache Gewindemutter 69 aufnimmt. Mit Hilfe der Tasche 68 ist die Gewindemutter 69 in Richtung parallel zur Längserstreckung des Gewindezapfens 66 festgelegt, und zwar in beiden Richtungen. Andererseits ist die Mutter 69 in der Tasche 68 frei drehbar.

Die axiale Verstellung der Wickelwelle 46 geschieht wie folgt:

Durch Drehen der Mutter 69 kann der in dem Gehäuseboden 63 drehfest festgesetzte Gewindefortsatz 66 in axialer Richtung verschoben werden. Die axiale Verschiebung wird über den Anlaufbund 48 auf die Wickelwelle 46 übertragen. Die Wickelwelle 46 wird, wie zuvor, durch die als Federmotor dienende Schraubenfeder 61 gegen den Anlaufbund 48 anliegend gehalten. Das obere Ende der Wickelwelle 46 kann sich bei der Höhenverstellung translatorisch auf dem Lagerzapfen 65 verschieben.

Da der Gewindefortsatz 66 drehfest durch die Öffnung 67 hindurch führt, wirkt der Gewindefortsatz 66 gleichzeitig als ortsfester Verankerungspunkt für die Schraubenfeder 51, damit diese in der Lage ist, die Wickelwelle 46 im Sinne des Aufwickelns der Rollobahn 21 gegenüber dem Gehäuse 26 in Umdrehungen zu versetzen.

Um eine Selbstverstellung auszuschließen kann der Mutter 69 eine ähnliche Rast- oder Sperreinrichtung zugeordnet werden, wie sie im Zusammenhang mit Fig. 3 ausführlich erläutert ist.

Die axial verstellbare Wickelwelle ist im Zusammenhang mit dem Fensterrollo 24 für den dreieckförmigen Fensterabschnitt 17 erläutert. Die axiale Verstellung kann auch in Verbindung mit dem im Wesentlichen viereckigen Abschnitt 16 verwendet werden, wobei der Aufbau für die Lagerung der Wickelwelle die gleiche ist, wie dies im Zusammenhang mit den Figuren 3 und 4 erläutert ist. Es genügt deswegen, in Fig. 5 lediglich den prinzipiellen Aufbau eines solchen Rollos zu zeigen, wobei die Beschreibung in sinngemäß gleicher Weise auch für ein Heckfensterrollo gilt. Die axiale Verschiebbarkeit der Wickelwelle bei derartigen Fenstern kann dazu verwendet werden, eine schräg verlaufende Verspannung in der Rollobahn zu vermeiden, wenn nach der Montage des Rollos im Kraftfahrzeug ein Versatz der Zugstange gegenüber der Wickelwelle aufgrund der Karosserietoleranzen auftritt.

Soweit bei dem Fensterrollo nach Fig. 5 Teile auftauchen, die funktional Teilen aus den vorherigen Figuren entsprechen, sind sie mit demselben Bezugszeichen versehen, gegebenenfalls ergänzt um einen Buchstaben.

Die Wickelwelle 46 ist bei der Ausführungsform nach Fig. 5 endseitig in der gleichen Weise gelagert, wie dies in den Fig. 3 und 4 gezeigt ist. Ein Unterschied kann u. a. jedoch darin bestehen, dass die endseitigen Lagerungen nicht in einem Gehäuse untergebracht sind, sondern an einem in Fig. 5 gestrichelt gezeichneten Traggestell 65.

Der Rollobahnzuschnitt 21 entspricht der Gestalt des jeweils zu beschattenden Fensters. Die Rollobahn ist mit einer Kante, wie beschrieben, an der Wickelwelle 46 befestigt, beispielsweise mittels eines Keders oder durch Kleben. Die von der Wickelwelle 46 abliegende Kante ist zu einer Schlaufe 66 umgeschlagen. Durch die so erhaltene Schlaufe führt ein Zugstab 67 hindurch, der beidends mit teleskopisch verschiebbaren Führungsgliedern 68 und 69 versehen ist.

Zur Führung des Zugstabs 67 sind bei der Ausführungsform nach Fig. 5 zwei in einer gemeinsamen Fläche verlaufende Führungsschienen 25a und 25b vorgesehen. Ihre Gestaltung entspricht der Ausführung, wie sie im Zusammenhang mit Fig. 2 erläutert ist, lediglich mit dem Unterschied, dass die Nutenschlitze sich in Richtung aufeinander zu öffnen. In den Nutenkammern laufen jeweils die zugehörige Schubglieder 33a und 33b. Über Führungsrohre 41a und 41b sind die unteren Enden der beiden Führungsschienen 25a und 25b mit dem Getriebemotor 35 verbunden. Der Getriebemotor 35 enthält in seinem Getriebegehäuse zwei Führungsbohrungen 39a und 39b, die tangential an dem Ausgangszahnrad 36 an gegenüber liegenden Seiten vorbeiführen. Durch in Gang setzen des Getriebemotors 35 werden die beiden Schubglieder 33a und 33b synchron um den gleichen Hub vorgeschoben, oder aus den Führungsschienen 25a, 25b zurückgezogen. Beim Vorschieben werden die in den Nutenkammern laufenden Führungsstücken 68 und 69 vorgeschoben, wobei sie die Vorderkante der Rollobahn 24 vor sich her schieben und dabei die Rollobahn 21 vor dem Fenster aufspannen.

Um Fluchtungsfehler bzw. einen seitlichen Versatz zwischen der Zugstange 67 in der oberen Endstellung und der axialen Lage der Wickelwelle 46 auszugleichen, kann diese, wie dies anhand der Figuren 3 und 4 ausführlich erläutert ist, in axialer Richtung geringfügig verschoben werden, so dass keine Schrägzugfalten in der Rollobahn 21 auftreten.

Bei einem Fensterrollo für Kraftfahrzeuge ist eine Lagereinrichtung für eine Wickelwelle vorgesehen, die es ermöglicht, die axiale Lage der Wickelwelle montageseitig einzustellen.

## Patentansprüche

1. Fensterrollo (24) für Kraftfahrzeuge,
mit einer Rollobahn (21), die eine Befestigungskante aufweist,
mit einer Wickelwelle (46), an der die Rollobahn (21) mit der Befestigungskante befestigt ist,
mit einer Antriebseinrichtung (35,51), mit der zumindest die Wickelwelle (46) in Sinne eines Aufwickelns der Rollobahn (21) auf die Wickelwelle (46) zu betätigen ist,
mit einer Lagereinrichtung (47,53,65) für die Wickelwelle (46), wobei die Lagereinrichtung (47,53,65) an einem Ende der Wickelwelle (46) einen zylindrischen Zapfen (47,65), auf dem die Wickelwelle (46) drehbar gelagert ist, und eine Verstelleinrichtung (53,66) aufweist, durch die die Axiallage der Wickelwelle (46) gegenüber den Zapfen (47, 65) montageseitig einstellbar ist.

2. Fensterrollo nach Anspruch 1, **dadurch gekennzeichnet, dass** das Fensterrollo (24) für den dreieckförmigen Teil (17) eines Seitenfensterrolloanordnung eines Kraftfahrzeugs vorgesehen ist.

3. Fensterrollo nach Anspruch 1, **dadurch gekennzeichnet, dass** die Rollobahn (21) einen zumindest angenähert dreieckförmigen Zuschnitt aufweist.

4. Fensterrollo nach Anspruch 1, **dadurch gekennzeichnet, dass** die Befestigungskante der Rollobahn (21) eine gerade Kante ist.

5. Fensterrollo nach Anspruch 1, **dadurch gekennzeichnet, dass** der Rollobahn (21) Führungsmittel (25,32,67) zugeordnet sind.

6. Fensterrollo nach Anspruch 5, **dadurch gekennzeichnet, dass** die Führungsmittel (25,32,67) ein an der Rollobahn (21) befestigtes Zugglied (32,67) umfassen.

7. Fensterrollo nach Anspruch 6, **dadurch gekennzeichnet, dass** das Zugglied (32,67) an einem von der Wickelwelle (46) am weitesten entfernt liegenden Punkt der Rollobahn (21) vorgesehen ist.

8. Fensterrollo nach Anspruch 6, **dadurch gekennzeichnet, dass** das Zugglied (32,67) eine Stange (67) ist, die sich über die Breite der Rollobahn (46), vorzugsweise im Wesentlichen parallel zu der Wickelwelle (46), erstreckt.

9. Fensterrollo nach Anspruch 5, **dadurch gekennzeichnet, dass** die Führungsmittel (25,32,67) wenigstens eine Führungsschiene (25) umfassen, mittels der das Zugglied (32,67) geführt ist.

10. Fensterrollo nach Anspruch 9, **dadurch gekennzeichnet, dass** die Führungsschiene (25) eine Führungsnut (27) aufweist, die sich aus einer Nutenkammer (28) und einem Nutenschlitz (29) zusammensetzt wobei die lichte Weite der Nutenkammer (28) größer ist als die Lichte Weite des Führungsschlitzes (29).

11. Fensterrollo nach Anspruch 10, **dadurch gekennzeichnet, dass** zwei in einer gemeinsamen Fläche liegende Führungsschienen (25) vorgesehen sind, deren Nutenschlitze (29) sich in Richtung aufeinander zu öffnen.

12. Fensterrollo nach Anspruch 1, **dadurch gekennzeichnet, dass** die Antriebseinrichtung (35,51) einen Federmotor (35) umfasst, der getrieblich mit der Wickelwelle (46) gekuppelt ist.

13. Fensterrollo nach Anspruch 1 und 6, **dadurch gekennzeichnet, dass** die Antriebseinrichtung (35,51) einen Getriebemotor (35) umfasst, der über wenigstens ein linienförmiges Schubglied (33) mit dem Zugglied (32,67) an der Rollobahn (21) gekuppelt ist.

14. Fensterrollo nach Anspruch 13, **dadurch gekennzeichnet, dass** das Schubglied (33) ausknicksicher in dem Bereich zwischen dem Getriebemotor (35) und der Führungsschiene (25) geführt ist.

15. Fensterrollo nach Anspruch 1, **dadurch gekennzeichnet, dass** die Wickelwelle (46) auf dem Zapfen (47,65) translatorisch bewegbar ist.

16. Fensterrollo nach Anspruch 1, **dadurch gekennzeichnet, dass** der Zapfen (47) einen Bund (48) aufweist, der als Anlagefläche für die benachbarte Stirnseite der Wickelwelle (46) dient.

17. Fensterrollo nach Anspruch 16, **dadurch gekennzeichnet, dass** zumindest der Bund (48) in axialer Richtung des Zapfens (47) verstellbar ist.

18. Fensterrollo nach Anspruch 17, **dadurch gekennzeichnet, dass** die Feder (51) des Federmotors derart angeordnet ist, dass die Wickelwelle (46) in Anlage an dem Bund (48) gehalten ist.

19. Fensterrollo nach Anspruch 17, **dadurch gekennzeichnet, dass** der Bund (48) mit dem Zapfen (46) einstückig ist und dass der Zapfen (46) axial verstellbar ist.

20. Fensterrollo nach Anspruch 1, **dadurch gekennzeichnet, dass** die Lagereinrichtung (47, 53, 65) eine Lagerbüchse (53) aufweist.

21. Fensterrollo nach Anspruch 20, **dadurch gekennzeichnet, dass** die Wickelwelle (46) in der Lagerbüchse (53) zumindest drehbar gelagert ist.

22. Fensterrollo nach Anspruch 20, **dadurch gekennzeichnet, dass** die Lagerbüchse (53) axial verstellbar ist.

23. Fensterrollo nach Anspruch 20, **dadurch gekennzeichnet, dass** der Lagerbüchse (53) ein Halter (58) zugeordnet ist, in dem die Lagerbüchse (53) axial verstellbar ist.

24. Fensterrollo nach Anspruch 20, **dadurch gekennzeichnet, dass** die Wickelwelle (46) einen Bund (54) aufweist.

25. Fensterrollo nach Anspruch 24, **dadurch gekennzeichnet, dass** der Bund (54) gegen ein Stirnende der Lagerbüchse (53) anliegt.

26. Fensterrollo nach Anspruch 24, **dadurch gekennzeichnet, dass** der Bund an jenem Ende der Büchse (54) liegt, die von dem anderen Ende der Wickelwelle (46) weg zeigt.

27. Fensterrollo nach Anspruch 20, **dadurch gekennzeichnet, dass** die Lagerbüchse (53) ein Außengewinde (56) trägt.

28. Fensterrollo nach Anspruch 20, **dadurch gekennzeichnet, dass** der Lagerbüchse (53) ein Betätigungsglied (61) zugeordnet ist.

29. Fensterrollo nach Anspruch 28, **dadurch gekennzeichnet, dass** das Betätigungsglied (61) von einer sternförmigen Scheibe gebildet ist.

30. Fensterrollo nach Anspruch 20, **dadurch gekennzeichnet, dass** der Lagerbüchse (53) eine Sicherungseinrichtung (62) zugeordnet ist.

31. Fensterrollo nach Anspruch 30, **dadurch gekennzeichnet, dass** die Sicherungseinrichtung (62) von einer Rasteinrichtung gebildet ist.

32. Fensterrollo nach Anspruch 30, **dadurch gekennzeichnet, dass** die Rasteinrichtung eine Rastklinke (62) und die sternförmigen Scheibe (61) umfasst.

33. Fensterrollo nach Anspruch 1, **dadurch gekennzeichnet, dass** ein Gehäuse (26) vorgesehen ist, in dem sich die Wickelwelle (46) befindet.

## Claims

1. Window roller blind (24) for motor vehicles,
with a blind sheet (21), which has a fastening edge,
with a winding shaft (46), to which the blind sheet (21) is fastened at the fastening edge,
with a drive means (35, 51), with which at least the winding shaft (46) can be operated in the sense of winding up the blind sheet (21) onto the winding shaft (46), with a bearing means (47, 53, 65) for the winding shaft (46), wherein at one end of the winding shaft (46) the bearing means (47, 53, 65) has a cylindrical journal (47, 65), on which the winding shaft (46) is rotatably mounted, and opposite the journal (47, 65) has an adjusting means (53, 66), by means of which the axial position of the winding shaft (46) is adjustable.

2. Window roller blind according to claim 1, **characterised in that** the window roller blind (24) is provided for the triangular part (17) of a side window roller blind arrangement of a motor vehicle.

3. Window roller blind according to claim 1, **characterised in that** the blind sheet (21) has an at least approximately triangular blank.

4. Window roller blind according to claim 1, **characterised in that** the fastening edge of the blind sheet (21) is a straight edge.

5. Window roller blind according to claim 1, **characterised in that** the blind sheet (21) has associated guide elements (25, 32, 67).

6. Window roller blind according to claim 5, **characterised in that** the guide elements (25, 32, 67) comprise a pulling member (32, 67) fastened to the blind sheet (21).

7. Window roller blind according to claim 6, **characterised in that** the pulling member (32, 67) is provided on a point of the blind sheet (21) located furthest away from the winding shaft (46).

8. Window roller blind according to claim 6, **characterised in that** the pulling member (32, 67) is a rod (67), which extends over the width of the blind sheet (46), preferably substantially parallel to the winding shaft (46).

9. Window roller blind according to claim 5, **characterised in that** the guide elements (25, 32, 67) comprise at least one guide rail (25), by means of which the pulling member (32, 67) is guided.

10. Window roller blind according to claim 9, **characterised in that** the guide rail (25) has a guide groove (27), which consists of a groove chamber (28) and a groove slot (29), wherein the inside width of the groove chamber (28) is larger than the inside width of the guide slot (29).

11. Window roller blind according to claim 10, **characterised in that** two guide rails (25) located in a common area are provided, the groove slots (29) of which open towards one another.

12. Window roller blind according to claim 1, **characterised in that** the drive means (35, 51) comprises a spring motor (35), which is coupled in transmission to the winding shaft (46).

13. Window roller blind according to claim 1 and 6, **characterised in that** the drive means (35, 51) comprises a geared motor (35), which is coupled to the pulling member (32, 67) on the blind sheet (21) by at least one linear pushing member (33).

14. Window roller blind according to claim 13, **characterised in that** the pushing member (33) is guided in a buckle-resistant manner in the region between the geared motor (35) and the guide rail (25).

15. Window roller blind according to claim 1, **characterised in that** the winding shaft (46) is movable in a translatory manner on the journal (47, 65).

16. Window roller blind according to claim 1, **characterised in that** the journal (47) has a collar (48), which serves as abutment surface for the adjacent front side of the winding shaft (46).

17. Window roller blind according to claim 16, **characterised in that** at least the collar (48) is adjustable in axial direction of the journal (47).

18. Window roller blind according to claim 17, **characterised in that** the spring (51) of the spring motor is arranged in such a way that the winding shaft (46) is held in abutment against the collar (48).

19. Window roller blind according to claim 17, **characterised in that** the collar (48) is formed in one piece with the journal (46), and that the journal (46) is axially adjustable.

20. Window roller blind according to claim 1, **characterised in that** the bearing means (47, 53, 65) has a bearing bush (53).

21. Window roller blind according to claim 20, **characterised in that** the winding shaft (46) is at least rotatably disposed in the bearing bush (53).

22. Window roller blind according to claim 20, **characterised in that** the bearing bush (53) is axially adjustable.

23. Window roller blind according to claim 20, **characterised in that** the bearing bush (53) has an associated holder (58), in which the bearing bush (53) is axially adjustable.

24. Window roller blind according to claim 20, **characterised in that** the winding shaft (46) has a collar (54).

25. Window roller blind according to claim 24, **characterised in that** the collar (54) abuts against a front end of the bearing bush (53).

26. Window roller blind according to claim 24, **characterised in that** the collar lies against the end of the bush (54), which points away from the other end of the winding shaft (46).

27. Window roller blind according to claim 20, **characterised in that** the bearing bush (53) bears an external thread (56).

28. Window roller blind according to claim 20, **characterised in that** the bearing bush (53) has an associated operating member (61).

29. Window roller blind according to claim 28, **characterised in that** the operating member (61) is formed by a star-shaped plate.

30. Window roller blind according to claim 20, **characterised in that** the bearing bush (53) has an associated locking means (62).

31. Window roller blind according to claim 30, **characterised in that** the locking means (62) is formed by a catch means.

32. Window roller blind according to claim 30, **characterised in that** the catch means comprises a latch (62) and the star-shaped plate (61).

33. Window roller blind according to claim 1, **characterised in that** a housing (26) is provided, in which the winding shaft (46) is located.

## Revendications

1. Store de vitre (24) pour véhicules automobiles, comprenant une bande de store (21) qui présente un bord de fixation,
un arbre d'enroulement (46) auquel la bande de store (21) est fixée par son bord de fixation,
un dispositif d'entraînement (35, 51) qui permet d'actionner au moins l'arbre d'enroulement (46), dans le sens d'un enroulement de la bande de store (21) sur l'arbre d'enroulement (46),
un dispositif de support (47, 53, 65) pour l'arbre d'enroulement (46), ledit dispositif de support (47, 53, 65) présentant, à une extrémité de l'arbre d'enroulement (46), un pivot (47, 65) cylindrique, sur lequel l'arbre d'enroulement (46) est monté avec possibilité de rotation, et, en vis-à-vis du pivot (47, 65), un dispositif de réglage (53, 66) qui permet de régler la position axiale de l'arbre d'enroulement (46).

2. Store de vitre selon la revendication 1, **caractérisé par le fait que** ledit store de vitre (24) est prévu pour la partie triangulaire (17) d'un agencement de store de vitre latérale d'un véhicule automobile.

3. Store de vitre selon la revendication 1, **caractérisé par le fait que** la bande de store (21) présente une découpe de forme au moins approximativement triangulaire.

4. Store de vitre selon la revendication 1, **caractérisé par le fait que** le bord de fixation de la bande de store (21) est un bord rectiligne.

5. Store de vitre selon la revendication 1, **caractérisé par le fait que** des moyens de guidage (25, 32, 67) sont associés à la bande de store (21).

6. Store de vitre selon la revendication 5, **caractérisé par le fait que** les moyens de guidage (25, 32, 67) comportent un élément de traction (32, 67) qui est fixé à la bande de store (21).

7. Store de vitre selon la revendication 6, **caractérisé par le fait que** l'élément de traction (32, 67) est prévu à un endroit de la bande de store (21) qui se situe à la distance maximale de l'arbre d'enroulement (46).

8. Store de vitre selon la revendication 6, **caractérisé par le fait que** l'élément de traction (32, 67) est une barre (67) qui s'étend sur la largeur de la bande de store (21), de préférence de façon sensiblement parallèle à l'arbre d'enroulement (46).

9. Store de vitre selon la revendication 5, **caractérisé par le fait que** les moyens de guidage (25, 32, 67) comportent au moins un rail de guidage (25), par lequel est guidé l'élément de traction (32, 67).

10. Store de vitre selon la revendication 9, **caractérisé par le fait que** le rail de guidage (25) présente une rainure de guidage (27) qui se compose d'une cavité de rainure (28) et d'une fente de rainure (29), la largeur intérieure de la cavité de rainure (28) étant supérieure à la largeur intérieure de la fente de guidage (29).

11. Store de vitre selon la revendication 10, **caractérisé par le fait qu'**il est prévu deux rails de guidage (25) qui se situent dans un même plan et dont les fentes de rainure (29) s'ouvrent l'une en direction de l'autre.

12. Store de vitre selon la revendication 1, **caractérisé par le fait que** le dispositif d'entraînement (35, 51) comprend un moteur à ressort (35) qui est accouplé mécaniquement à l'arbre d'enroulement (46).

13. Store de vitre selon les revendications 1 et 6, **caractérisé par le fait que** le dispositif d'entraînement (35, 51) comprend un motoréducteur (35) qui est accouplé par au moins un élément de poussée (33) linéaire à l'élément de traction (32, 67) de la bande de store (21).

14. Store de vitre selon la revendication 13, **caractérisé par le fait que** l'élément de poussée (33) est guidé avec résistance au flambage dans la zone située entre le motoréducteur (35) et le rail de guidage (25).

15. Store de vitre selon la revendication 1, **caractérisé par le fait que** l'arbre d'enroulement (46) peut être déplacé en translation sur le pivot (47, 65).

16. Store de vitre selon la revendication 1, **caractérisé par le fait que** le pivot (47) présente un collet (48) qui sert de surface d'appui pour la face frontale contiguë de l'arbre d'enroulement (46).

17. Store de vitre selon la revendication 16, **caractérisé par le fait qu'**au moins le collet (48) peut être déplacé dans le sens axial du pivot (47).

18. Store de vitre selon la revendication 17, **caractérisé par le fait que** le ressort (51) du moteur à ressort est disposé de manière telle que l'arbre d'enroulement (46) soit maintenu en appui contre le collet (48).

19. Store de vitre selon la revendication 17, **caractérisé par le fait que** le collet (48) est réalisé d'une seule pièce avec le pivot (47) et que le pivot (47) peut être déplacé axialement.

20. Store de vitre selon la revendication 1, **caractérisé par le fait que** le dispositif de support (47, 53, 65) présente un coussinet (53).

21. Store de vitre selon la revendication 20, **caractérisé par le fait que** l'arbre d'enroulement (46) est monté au moins mobile en rotation dans le coussinet (53).

22. Store de vitre selon la revendication 20, **caractérisé par le fait que** le coussinet (53) peut être déplacé axialement.

23. Store de vitre selon la revendication 20, **caractérisé par le fait qu'**est associé au coussinet (53), un élément de fixation (58) dans lequel le coussinet (53) peut être déplacé axialement.

24. Store de vitre selon la revendication 20, **caractérisé par le fait que** l'arbre d'enroulement (46) présente un collet (54).

25. Store de vitre selon la revendication 24, **caractérisé par le fait que** le collet (54) est en appui contre une face frontale du coussinet (53).

26. Store de vitre selon la revendication 24, **caractérisé par le fait que** le collet se situe à l'extrémité du coussinet (53) qui est opposée à l'autre extrémité de l'arbre d'enroulement (46).

27. Store de vitre selon la revendication 20, **caractérisé par le fait que** le coussinet (53) porte un filetage extérieur (56).

28. Store de vitre selon la revendication 20, **caractérisé par le fait qu'**un élément d'actionnement (61) est associé au coussinet (53).

29. Store de vitre selon la revendication 28, **caractérisé par le fait que** l'élément d'actionnement (61) est constitué d'un disque en forme d'étoile.

30. Store de vitre selon la revendication 20, **caractérisé par le fait qu'**un dispositif de verrouillage (62) est associé au coussinet (53).

31. Store de vitre selon la revendication 30, **caractérisé par le fait que** le dispositif de verrouillage (62) est constitué d'un dispositif d'encliquetage.

32. Store de vitre selon la revendication 30, **caractérisé par le fait que** le dispositif d'encliquetage comprend un cliquet (62) et le disque (61) en forme d'étoile.

33. Store de vitre selon la revendication 1, **caractérisé par le fait qu'**il est prévu un boîtier (26) dans lequel est logé l'arbre d'enroulement (46).
